(19) Europäisches Patentamt
European Patent Office
Office européen des brevets

(11) **EP 1 199 292 A1**

(12) **EUROPÄISCHE PATENTANMELDUNG**

(43) Veröffentlichungstag:
**24.04.2002 Patentblatt 2002/17**

(51) Int Cl.⁷: **C07B 37/04**

(21) Anmeldenummer: **01124744.2**

(22) Anmeldetag: **17.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.10.2000 DE 10051316**

(71) Anmelder: **OMG AG & Co. KG**
**63457 Hanau-Wolfgang (DE)**

(72) Erfinder:
- **Beller, Matthias, Prof. Dr.**
  **18119 Rostock (DE)**
- **Gomez-Andreo, Mario, Dr.**
  **18057 Rostock (DE)**
- **Zapf, Alexander, Dr.**
  **18057 Rostock (DE)**
- **Karch, Ralf, Dr.**
  **63801 Kleinostheim (DE)**
- **Kleinwächter, Ingo, Dr.**
  **63457 Hanau (DE)**
- **Briel, Oliver**
  **63067 Offenbach (DE)**

(54) **Verfahren zur Herstellung von mono-, bi- oder polyfunktionellen Biarylen**

(57) Die Erfindung betrifft ein Verfahren zur Herstellung von mono-, bi- oder polyfunktionellen Biarylen in Anwesenheit eines Metallkomplexes der allgemeinen Formel IV

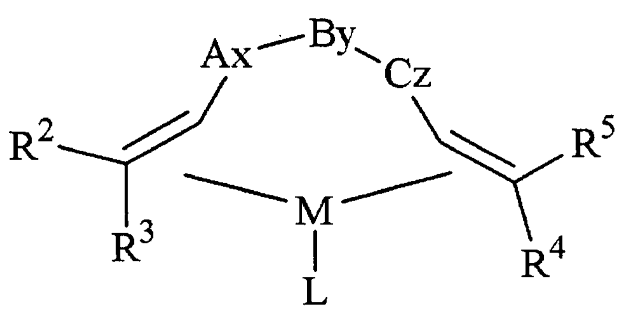

(IV)

als Katalysator.

## Beschreibung

Die vorliegende Erfindung betrifft ein Verfahren zur Herstellung von Biarylen mit aktiven Nickel-, Palladium- oder Platinkatalysatoren.

Biarylverbindungen, insbesondere Biphenylverbindungen haben technische Bedeutung als Feinchemikalien, Zwischenprodukte für Pharmazeutika, Aufheller und Agrochemikalien.

Eine häufig angewandte Methode zur Synthese von Biarylen ist die Suzuki-Reaktion, bei der Iod- oder Bromaromaten sowie Aryltriflate und seltener Chloraromaten mit Aryl-, Vinyl- oder Alkylboronsäurederivaten in Gegenwart von Palladiumkatalysatoren umgesetzt werden. Ein Übersichtsartikel, der diese Methodik beschreibt, ist beispielsweise M. Beller, C. Bolm, Transition Metals for Organic Synthesis, Vol. 1, p. 208, VCH-Wiley, Weinheim **1998.**

Als Katalysatoren, die im Rahmen der Suzuki-Reaktion verwendet werden, eignen sich im allgemeinen Palladium- und Nickelverbindungen. Trotz des ökonomischen Vorteils von Nickel-Katalysatoren werden aufgrund der geringeren Toxizität und der größeren Toleranz gegenüber funktionellen Gruppen Palladium-Katalysatoren gegenüber Nickel-Katalysatoren bevorzugt. Im Falle des Einsatzes von Palladium-Katalysatoren werden sowohl Palladium(II)- als auch Palladium(0)-Komplexe bei Suzuki-Reaktionen verwendet. Als aktive katalytische Spezies formuliert man gemäß Angaben in der Literatur koordinativ ungesättigte 14- und 16-Elektronen Palladium(0)-Spezies, welche mit Donorliganden wie Phosphanen stabilisiert werden. Insbesondere beim Einsatz von kostengünstigeren Edukten wie Arylbromiden oder Arylchloriden benötigt man den Zusatz von stabilisierenden Liganden, damit eine befriedigende katalytische Aktivierung der Edukte erzielt wird.

Die für Suzuki-Reaktionen beschriebenen Katalysatorsysteme weisen häufig nur mit nicht ökonomischen Ausgangsmaterialien wie Iodaromaten und aktivierten Bromaromaten befriedigende katalytische Wechselzahlen ("turnover numbers"; TON) auf. Ansonsten müssen bei deaktivierten Bromaromaten (also Bromaromaten mit "elektronenschiebenden" Substituenten oder sterisch gehinderte Bromaromaten) und insbesondere bei Chloraromaten große Mengen an Katalysator - üblicherweise über 1 mol% - zugesetzt werden, um technisch nutzbare Umsätze zu erzielen.

Aufgrund der Komplexität der Reaktionsgemische ist zudem kein einfaches Katalysatorrecycling möglich, so daß auch die Katalysatorkosten in der Regel einer technischen Realisierung entgegenstehen. Katalysatorsysteme, basierend auf wasserlöslichen Phosphanen, ergeben zwar für die industriell bedeutsame Umsetzung von 2-Chlorbenzonitril mit p-Tolylboronsäure befriedigende Katalysatoraktivitäten, jedoch beinhalten die Katalysatoren teure sulfonierte Phosphane. Darüber hinaus sind eine Reihe von Chloraromaten auch mit diesen Katalysatoren noch nicht technisch befriedigend zu aktivieren.

Neuere aktive Katalysatorsysteme basieren auf cyclopalladierten Phosphanen (W. A. Herrmann, C. Broßmer, K. Öfele, C.-P. Reisinger, T. Priermeier, M. Beller, H. Fischer, *Angew. Chem.* **1995,** *107,* 1989; *Angew. Chem. Int. Ed. Engl.* **1995,** *34,* 1844) oder Gemischen von sterisch anspruchsvollen Arylphosphanen (J. P. Wolfe, S. L. Buchwald, *Angew. Chem*. **1999,** *111,* 2570; *Angew. Chem. Int. Ed. Engl*. **1999**, *38,* 2413) bzw. Tri-tert.-butylphosphan (A. F. Littke, G. C. Fu, *Angew. Chem*. **1998,** *110,* 3586; *Angew. Chem. Int. Ed. Engl*. **1998,** *37,* 3387) mit Palladiumsalzen oder Palladiumkomplexen.

Kostengünstige Chloraromaten sind jedoch auch mit diesen Katalysatoren generell nicht technisch befriedigend zu aktivieren, da die Katalysatorproduktivitäten (TON) unter 10000 und die Katalysatoraktivitäten (TOF) unter 1000 $h^{-1}$ liegen. Somit müssen für das Erreichen von hohen Ausbeuten insbesondere bei diesen industriell interessanten Ausgangsmaterialien vergleichsweise hohe und damit sehr teure Katalysatormengen eingesetzt werden. So betragen beispielsweise die Katalysatorkosten für die Herstellung von einem Kilogramm eines organischen Zwischenprodukts mit dem Molekulargewicht 200 bei Verwendung von 1 Mol-% Palladiumkatalysator bei derzeitigen Edelmetallpreisen mehr als 100 US$, was die Notwendigkeit zur Verbesserung der Katalysatorproduktivität deutlich macht. Daher sind trotz aller Weiterentwicklungen der Katalysatoren in den letzten Jahren bis dato nur wenige industrielle Umsetzungen der Arylierung von Chloraromaten bekannt geworden.

Aus den genannten Gründen besteht ein großer Bedarf an neuen Verfahren zur Herstellung von Biarylen, die nicht die Nachteile der bekannten katalytischen Verfahren zeigen, und hierfür geeigneten Palladium-Katalysatorsystemen, die kostengünstige Liganden aufweisen, die für die großtechnische Durchführung geeignet sind und die Biaryle in hoher Ausbeute, Katalysatorproduktivität und Reinheit liefern.

Diese Aufgabe wird gelöst durch ein Verfahren zur Herstellung von mono-, bi- oder polyfunktionellen Biarylen der allgemeinen Formel I

$$Ar - Ar' \qquad (I)$$

durch Umsetzung einer Arylverbindung der Formel II

$$Ar - X \quad (II)$$

mit einem Arylboronsäurederivat der Formel III

$$Ar' - B(OR^1)_2 \quad (III)$$

in Anwesenheit eines Katalysators, das dadurch gekennzeichnet ist, daß man als Katalysator einen Metallkomplex der allgemeinen Formel IV

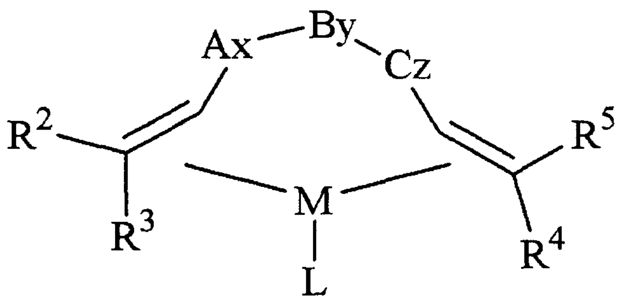

(IV)

einsetzt,
wobei in den Formeln I bis IV

| | |
|---|---|
| Ar und Ar' | jeweils unabhängig voneinander ein gegebenenfalls beliebig substituierter mono- oder polycyclischer aromatischer Rest mit bis zu 14 C-Atomen im Ring, oder ein gegebenenfalls beliebig substituierter heteroaheteroaromatischer Rest mit 5 bis 10 Atomen im Ring, wovon bis zu vier Atome unabhängig voneinander N, O oder S sein können |
| X | J, Br, Cl, $OSO_2CF_3$, $OSO_2$(Aryl), $OSO_2$(Alkyl), $N_2^+$, |
| M | Nickel, Palladium oder Platin, |
| L | ein monodentater phosphororganischer Ligand $PR^6R^7R^8$, |
| A, B, C | unabhängig voneinander Sauerstoff, Schwefel, eine $CH_2$-Gruppe, eine $C(R^9)_a(R^{10})_b$-Gruppe, eine $N(R^{11})_c$-Gruppe, eine $Si(R^{12})_d(R^{13})_e$-Gruppe, wobei a, b, c, d, e unabhängig voneinander 0 oder 1 und für den Fall, daß a, b, c, d, e mindestens eines der beteiligten Reste 0 ist, A, B und C auch Teile eines Ringsystems sein können, |
| x, y, z | 0 oder 1 und x+y+z = 1 bis 3, |
| R1 | einen Wasserstoff-, Alkyl-, Aryl- oder Alkenylrest, wobei in Formel III $B(OR^1)_2$ auch ein Ringsystem bilden kann, |
| $R^6$ bis $R^8$ | die Bedeutung von $R^1$, oder O-Alkyl, O-C(O)-Alkyl, O-(Aryl), sowie Gruppen eines beliebigen kondensierten Ringsystems, |
| $R^2$ bis $R^5$ und $R^9$ bis $R^{13}$ | die Bedeutung von $R^1$, oder O-Alkyl, O-C(O)-Alkyl, O-(Aryl), O-C(O)-Aryl, F, Cl, OH, $NO_2$, $Si(Alkyl)_3$, $CF_3$, CN, $CO_2H$, C(O)H, $SO_3H$, $NH_2$, NH(Alkyl), $N(Alkyl)_2$, $P(Alkyl)_2$, $SO_2$(Alkyl), SO(Alkyl),SO(Aryl), $SO_2$(Aryl), $SO_3$(Alkyl), $SO_3$(Aryl), S-Alkyl, S-Aryl, S-Alkenyl, NH-CO (Alkyl), $CO_2$(Alkyl), $CONH_2$, CO(Alkyl), NHCOH, $NHCO_2$(Alkyl), CO(Aryl), $CO_2$(Aryl), |

$CH=CH-CO_2(Alkyl)$, $CH=CH-CO_2H$, $P(Aryl)_2$, $PO(Aryl)_2$, $PO(Alkyl)_2$, $PO_3H$, $PO(O-Alkyl)_2$, sowie Gruppen eines beliebigen kondensierten Ringsystems,
wobei Alkyl für einen Kohlenwasserstoffrest mit 1 bis 10 C-Atomen und Alkenyl für einen ein- oder mehrfach ungesättigten Kohlenwasserstoffrest mit 1 bis 10 C-Atomen, die jeweils verzweigt und/oder mit Cl, F, Alkyl, O-Alkyl, Phenyl, O-Phenyl substituiert sein können und Aryl für einen gegebenenfalls mit Cl, F, Alkyl, O-Alkyl, Phenyl, O-Phenyl substituierten aromatischen oder heteroaromatischen Rest mit 5 bis 10 Atomen im Ring, steht,

bedeutet.

In dem erfindungsgemäßen Verfahren werden vorzugsweise Arylverbindungen der Formel II mit Arylboronsäurederivaten der Formel III umsetzt, in denen Ar und Ar unabhängig voneinander für einen gegebenenfalls substituierten Phenyl-, Naphthyl-, Anthryl-, Phenanthryl-, oder Biphenylrest stehen.

In dem erfindungsgemäßen Verfahren werden als Arylverbindungen bevorzugt Verbindungen der Formel IIa

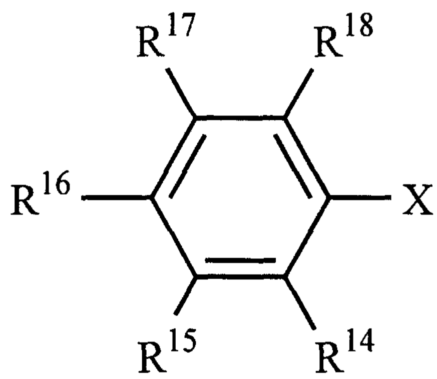

(IIa)

worin $R^{14}$ bis $R^{18}$ die für $R^2$ bis $R^5$ und $R^9$ bis $R^{13}$ gegebenen Bedeutungen besitzen, und als Arylboronsäurederivate Verbindungen der Formel IIIa

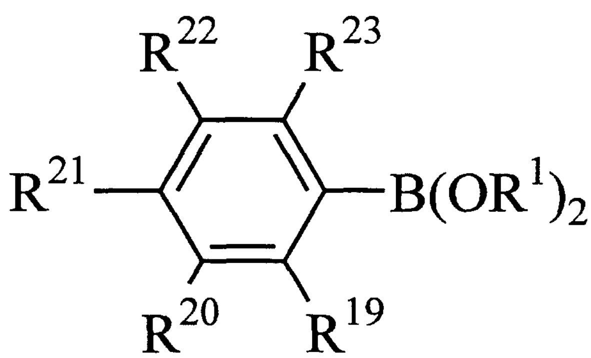

(IIIa)

worin $R^{19}$ bis $R^{23}$ die für $R^2$ bis $R^5$ und $R^9$ bis $R^{13}$ gegebenen Bedeutungen besitzen, eingesetzt.

In dem erfindungsgemäßen Verfahren werden als Katalysator insbesondere Metallkomplexe der Formel IV eingesetzt, die als Metall M bevorzugt Nickel und Palladium, und insbesondere Palladium enthalten.

In den Katalysatoren der Formel IV fungieren als Dienkomponente besonders bevorzugt Diallylether, Diallylamin, Diallylmethylamin, N-Acetyldiallylamin, Diallylsulfid, Diallylsilan, Diallyldimethylsilan, Divinyldisiloxan, Bis-([2]thienylmethyl)-ether, Bis-(2-cyano-3ξ-[2]furyl-allyl)-ether, 1,1,3,3-Tetramethyl-1,3-divinyldisiloxan, Difurfurylether, Difurfurylamin, Bis(thiophen-2-yl-methyl)-amin, Difurfurylsulfid, 1,1,3,3-Tetramethyl-1,3-dithien-2-yldisiloxan, 1,1,3,3-Tetramethoxy-1,3-divinyl-disiloxan, 1,3-Dimethyl-1,3-divinyldisiloxandiol, 1,3,5,7-Tetramethyl-1,3,5,7-tetravinylcyclotetra-siloxan, 1,3,5-Trimethyl-1,3,5-trivinyl-cyclotrisiloxan, 1,3,5,7,9-Pentamethyl-1,3,5,7,9-pentavinyl-cyclopentasiloxan, 1,3-Divinylbenzol, 2,6-Divinylpyridin und deren Derivate.

In den Katalysatoren der Formel IV sind als Liganden L bevorzugt Trialkylphosphine und Triarylphosphine. Besonders bevorzugt sind Tricyclohexylphosphin, Tri-n-butylphosphin, Tri-tert-butylphosphin, Triphenylphosphin, Tri-o-tolylphosphin, Di-(1-adamantyl)-n-butylphosphin, Di-(1-adamantyl)-i-propylphosphin, Di-(1-adamantyl)-cyclohexylphosphin, 2-(Dicyclohexylphosphino)biphenyl, 2-(Dicyclohexylphosphino)toluol, N,N-Dimethyl-2-(dicyclohexylphosphino)anilin, 2-(Di-t-butylphosphino)biphenyl, 2-(Di-t-butylphosphino)toluol, N,N-Dimethyl-2-(di-t-butylphosphino)anilin.

Das erfindungsgemäße Verfahren ist besonders geeignet für die Synthese von Biarylen der Formel I, worin Aryl und Aryl' für einen substituierten Phenyl-, Naphthyl-, Anthryl-, Phenanthryl-, Biphenyl-Rest oder/und einen fünf-, sechs- oder siebengliedrigen Heteroaromaten mit gegebenenfalls Stickstoff-, Sauerstoff- oder Schwefelatomen im Ring stehen. Im Falle der Heteroaromaten sind substituierte Pyridine, Pyrimidine, Oxazole, Imidazole, Pyrazine, Chinoline, Indole, Furane, Benzofurane oder/und Thiophene besonders bevorzugt.

Das erfindungsgemäße Verfahren hat sich insbesondere für die Herstellung von Verbindungen der Formel I bewährt, worin Aryl und Aryl' bis zu 4 Substituenten tragen, die unabhängig voneinander, Alkyl, O-Alkyl, O-CO-Alkyl, N-$Alkyl_2$, Phenyl, Aryl, Fluor, Chlor, $NO_2$, CN, COOH, CHO, $SO_2$-Alkyl, NH-Alkyl, COO-Alkyl, $CONH_2$, CONH-Alkyl-, CO-Alkyl, CO-Phenyl und PO-$Phenyl_2$ sein können, wobei Alkyl und Aryl die oben gegebenen Bedeutung haben.

In dem erfindungsgemäßen Verfahren wird der Katalysator in einer Menge von 0,001 bis 10 mol% und vorzugsweise 0,01 bis 1 mol%, bezogen auf die Konzentration an Arylverbindung oder Arylboronsäurederivat, eingesetzt.

Das Verfahren wird im Normalfall in einem Lösungsmittel durchgeführt. Als Lösungsmittel finden im allgemeinen inerte organische Lösungsmittel und/oder Wasser Verwendung. Besonders geeignet sind als Lösungsmittel oder Lösungsmittelgemische Wasser, aliphatische Ether, aromatische oder aliphatische Kohlenwasserstoffe, Alkohole und Ester. Beispiele für diese besonders geeigneten Lösungsmittel sind THF (Tetrahydrofuran), Dioxan, Diethylether, Diglyme (Diethylenglykol-dimethylether), MTBE (Methyltertiär-butylether), DME (Ethylenglykol-dimethylether), Toluol, Xylole, Anisol, Ethylacetat, Methanol, Ethanol, Butanol, Ethylenglycol, Ethylencarbonat und Propylencarbonat. Geeignet sind aber auch dipolar aprotische Lösungsmittel wie Dialkylsulfoxide, Nitrile, N,N-Dialkylamide von aliphatischen Carbonsäuren oder alkylierte Lactame. Als Beispiele seien hier genannt Dimethylsulfoxid, Acetonitril, Benzonitril, N, N-Dimethylacetamid, N,N-Dimethylformamid und N-Methylpyrrolidon.

Das Verfahren wird vorzugsweise bei Temperaturen von 0 bis 200 °C durchgeführt; in vielen Fällen hat es sich bewährt, bei Temperaturen von 40 bis 180 °C, bevorzugt bei 60 bis 160 °C, zu arbeiten. Die Reaktion kann bei einem Druck von 0,5 bis 100 bar durchgeführt werden, wobei vorzugsweise im Bereich des Normaldrucks bis zu 60 bar gearbeitet wird.

Es ist vorteilhaft, die Reaktion in Gegenwart einer Base durchzuführen. Hierfür geeignet sind primäre, sekundäre oder tertiäre Amine wie Alkylamine, Dialkylamine, Trialkylamine, die alicyclisch oder offenkettig sein können.Als Basen kommen auch Alkali- oder Erdalkalisalze aliphatischer oder aromatischer Carbonsäuren, insbesondere Acetate, Propionate, Benzoate, oder Alkali- oder Erdalkalicarbonate, -hydrogencarbonate, -phosphate, -hydrogenphosphate, -oxide oder -hydroxyde in Betracht.

Weiterhin können als Basen Metallalkoxide, insbesondere Alkali- oder Erdalkalialkoxide wie Natriummethanolat, Kaliummethanolat, Natriumethanolat, Kaliumethanolat, Magnesiummethanolat, Magnesiumethanolat, Calciumethanolat, Calciummethanolat, Natrium-t-butanolat oder Kalium-t-butanolat in dem erfindungsgemäßen Verfahren eingesetzt werden.

Die Base kann durch eine Aktivierung der Arylboronsäure zu anionischen Boranatspezies den Reaktionsverlauf positiv beeinflussen. Neben den oben genannten Basen kann eine solche Aktivierung auch durch Zusatz von Fluoridsalzen wie beispielsweise Cäsiumfluorid, Calciumfluorid, Natriumfluorid, Kaliumfluorid, Tetraalkylammouniumfluoride erreicht werden.

Die Base wird zweckmäßigerweise in einem Anteil von 0,1 bis 5 mol-Äquivalent, bezogen auf die Konzentration an Arylverbindung oder Arylboronsäurederivat, eingesetzt.

Die eingesetzten Katalysatoren der Formel IV können sowohl als molekular definierte Verbindungen eingesetzt werden, als auch in situ durch die Umsetzung einer Metall-Dien-Vorstufe mit einer entsprechenden phosphororganischen Verbindung $PR^6R^7R^8$ hergestellt werden. Eine Katalysatorvorstufe ist etwa eine Komplexverbindung zwischen dem Metall in der Oxidationsstufe 0 und einem oder mehreren Dienliganden $R^2R^3C=CH-A_x-B_y-C_z-CH=CR^4R^5$. Typische Katalysatorvorstufen sind z.B. Komplexe von Pd(0) oder Ni(0) mit derartigen Dienen, wobei diese in der Katalysatorvorstufe sowohl mono-, als auch bidentat koordinieren können.

Besonders vorteilhaft an den in dem erfindungsgemäßen Verfahren einzusetzenden Katalysatorsystemen ist, daß eine Präformierung, also die Vorreaktion zum aktiven Katalysator, besonders einfach gelingt und daß mit einem Metall-Dien/phosphororganische Verbindung-Verhältnis von 1:1 gearbeitet werden kann. Dadurch vermeidet man einen Überschuß an teuren phosphororganischen Liganden, vereinfacht die Aufarbeitung und erhält aktivere Katalysatoren.

Bei Einsatz von Chloraromaten, Bromaromaten, Aryltriflaten oder Arylmesylaten sowie verwandten Ausgangsprodukten ist es mitunter vorteilhaft, einen Co-Katalysator zum Katalysator zuzusetzen. Dieser Co-Katalysator kann ein Salz eines Halogens, insbesondere ein Halogenid der Alkalielemente oder Erdalkalielemente, ein Ammoniumhalogenid, ein Tetraalkylammoniumhalogenid, ein Phosphoniumhalogenid und/oder ein Tetraalkylphosphoniumhalogenid sein. Vorzugsweise ist der Co-Katalysator ein Fluorid, Bromid oder Chlorid. Besonders bevorzugt sind Calciumfluorid, Tetrabutylammoniumfluorid, Cäsiumfluorid, Kaliumfluorid, Natriumfluorid, Lithiumbromid, Natriumbromid, Kaliumbromid, Cäsiumbromid, Lithiumchlorid, Tetrabutylammoniumchlorid, Tetrabutylammoniumbromid, Benzyltrimethylammoniumbromid, Benzyltrimethylammoniumchlorid, Trioctylmethylammoniumbromid, Tetraphenylphosphoniumbromid, Tetraphenylphosphoniumchlorid.

Der Co-Katalysator wird in einer Menge von 0.01 bis 500 mol% und bevorzugt von 0.1 bis 300 mol% bezogen auf die Menge an Arylverbindung oder Arylboronsäurederivat eingesetzt. Bei verfahrenstechnischen Vorteilen kann die Reaktion auch im Co-Katalysator als Lösungsmittel (Salzschmelze) durchgeführt werden.

Bei dem erfindungsgemäßen Verfahren können Turnover-Werte der Katalysatoren in der Größenordnung von 1.000.000 und mehr für Bromaromaten als Ausgangsmaterialien und 10.000 und mehr für Chloraromaten realisiert werden.

Aufgrund der Katalysatoraktivitäten ist es somit bei dem erfindungsgemäßen Verfahren möglich, extrem kleine Mengen an Katalysator zu verwenden, so daß die Katalysatorkosten insbesondere beim Einsatz von Palladiumkatalysatoren im Vergleich zu herkömmlichen Suzuki-Reaktionen für den entsprechenden Prozeß nicht kostenlimitierend sind.

Die erfindungsgemäß hergestellten Biaryle können technisch eingesetzt werden etwa als Zwischenprodukte für Pharmazeutika (zum Beispiel für AT II-Antagonisten) und Agrochemikalien, als Ligandenvorstufen für Metallocenkatalysatoren, als optische Aufheller und Bausteine für Polymere.

<u>Beispiele:</u>

<u>Allgemeine Arbeitsvorschrift</u>

In einem Druckrohr werden unter einer Argon-Atmosphäre 3.0 mmol Arylhalogenid, 4.0 mmol Phenylboronsäure, 3.0 mmol tri-Kaliumphosphat, 3.0 mmol Kaliumfluorid, eine entsprechende Menge an Pd(0)-Katalysator und 100 µL Hexadecan (als interner Standard für die GC-Analytik) zu 8 ml trokkenem Tetrahydrofuran gegeben. Das Rohr wird verschlossen und in ein 100 °C heißes Siliconölbad gehängt. Nach 22 h läßt man es auf Raumtemperatur abkühlen. Die Feststoffe werden in 10 ml $CH_2Cl_2$ und 10 ml 1n Natriumhydroxyd gelöst. Die organische Phase wird gaschromatographisch analysiert und die Produkte werden säulenchromatographisch (Kieselgel, Hexan/Ethylacetat-Mischungen) isoliert.

<u>Erfindungsgemäße zu verwendende Katalysatoren:</u>

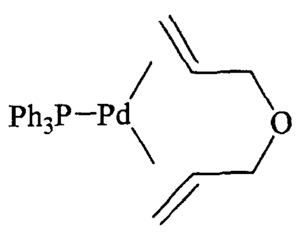

1

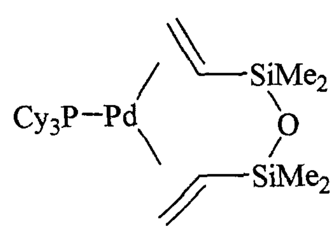

2

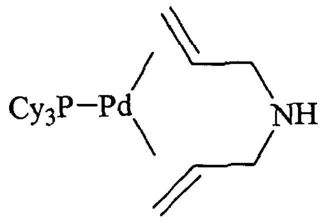

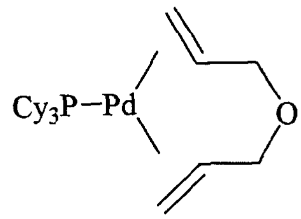

**3** **4**

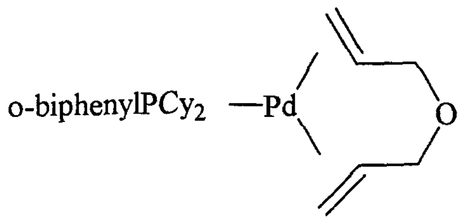

**5**

In den Strukturformeln der Beispiele 1 - 5 steht:

Me für Methyl

Ph für Phenyl

Cy für Cyclohexyl

o-biphenyl für ortho-Biphenyl

Katalysatoren gemäß Stand der Technik (zum Vergleich) :

Katalysatormischung A: $Pd_2(dba)_3/PCy_3$ 1:1

Katalysatormischung B: $Pd(OAc)_2/PCy_3$ 1:1

Katalysatormischung C: $Pd(OAc)_2/PCy_3$ 1:2.

Hierin steht:

$Pd_2(dba)_3$ für Tris-dibenzylidenaceton-di-palladium(0)

$Pd(OAc)_2$ für Palladium(II)-acetat

Cy für Cyclohexyl

Beispiele 1 bis 22

Vergleich der erfindungsgemäßen Katalysatoren anhand verschiedener Substrate.[a]

Tabelle 1

| Nr. | Halogenaromat *) | Produkt *) | Katalysator | Ausbeute [%] [b] | TON |
|---|---|---|---|---|---|
| 1 | 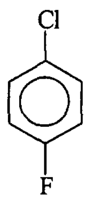 | 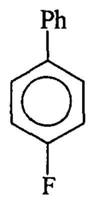 | 2 | 15 | 300 |
| 2 | | | 3 | 34 | 680 |
| 3 | | | 4 | 34 | 680 |
| 4 | | | 5 | 67 | 1340 |
| 5 | 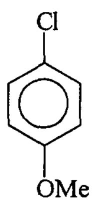 | 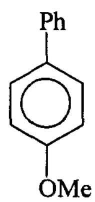 | 2 | 28 | 560 |
| 6 | | | 3 | 48 | 960 |
| 7 | | | 4 | 56 | 1120 |
| 8 | | | 5 | 72 | 1440 |
| 9 | 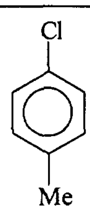 | 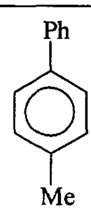 | 2 | 23 | 460 |
| 10 | | | 3 | 54 | 1080 |
| 11 | | | 4 | 67 | 1340 |
| 12 | | | 5 | 82 | 1640 |

| | | | | | |
|---|---|---|---|---|---|
| 13 | 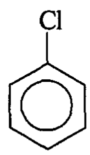 | 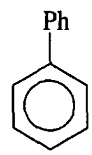 | 2 | 29 | 580 |
| 14 | | | 3 | 45 | 900 |
| 15 | | | 4 | 79 | 1580 |
| 16 | | | 5 | 87 | 1740 |
| 17 | | | 2 | 96 | 1920 |
| 18 | | | 3 | 95 | 1900 |
| 19 | 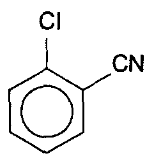 | 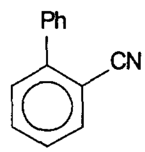 | 4 | 96 | 1920 |
| 20 | | | 5 | 97 | 1940 |
| 21 | | | 1 | 32 | 65[c] |
| 22 | | | 1 | 16 | 160[d] |

[a] 0.05 mol-% Katalysator.

[b] Gaschromatographisch bestimmt

[c] 0.5 mol-% Katalysator.

[d] 0.1 mol-% Katalysator.

*) Ph = Phenyl; Me = Methyl

Beispiele 23 bis 34

Vergleich erfindungsgemäßer Katalysatoren mit anderen Pd(0) Katalysatoren. [a]

Tabelle 2

| Nr. | Halogenaromat *) | Produkt *) | Katalysator | Ausbeute [%] [b] | TON |
|---|---|---|---|---|---|
| 23 | 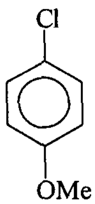 | 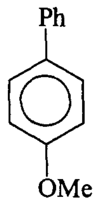 | A | 5 | 100 |
| 24 | | | B | 8 | 160 |
| 25 | | | C | 28 | 560 |
| 26 | | | 4 | 56 | 1120 |
| 27 | 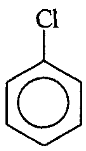 | 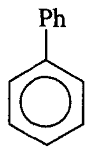 | A | 8 | 160 |
| 28 | | | B | 11 | 220 |
| 29 | | | C | 28 | 560 |
| 30 | | | 4 | 79 | 1580 |
| 31 | | | A | 91 | 1820 |
| 32 | 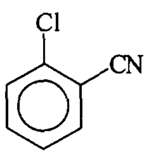 | 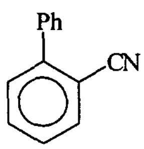 | B | 91 | 1820 |
| 33 | | | C | 95 | 1900 |
| 34 | | | 4 | 96 | 1920 |

[a] 0.05 mol-% Katalysator.

[b] Gaschromatographisch bestimmt

*) Ph = Phenyl; Me = Methyl

Beispiele 35 bis 48

Es wurden folgende Verbindungen mit dem Katalysator 4 mit Produktivitäten TON größer 5000 hergestellt:

35. 4-Methyl-2'-cyanobiphenyl

36 4-Methylthio-4-fluorbiphenyl

37. 2,2'-Dimethyl-1,1'-binaphthyl

38. 2,2'-Dimethyl-6,6'-dimethoxybiphenyl

39. 4,4'-Dicyanobiphenyl

40. 3-Dimethylamino-3'-ethylbiphenyl

41. 3,5-Dimethoxy-4'-methylbiphenyl

42. 4-Trifluormethyl-3',5'-dimethoxybiphenyl

43. 1-(N,N-Dimethylamino)-1'-brombiphenyl

44. 2-Methoxy-2'-brombiphenyl

45. 2-Methyl-2'-brombiphenyl

46. 1-(N,N-Dimethylamino)-1'chlorbiphenyl

47. 2-Methoxy-2'chlorbiphenyl

48. 2-Methyl-2'-chlorbiphenyl

Die Beispiele belegen, daß es bei dem erfindungsgemäßen Verfahren möglich ist, in vielen Fällen Ausbeuten von mehr als 80 % bei hohen Turnover-Werten zu erreichen.

## Patentansprüche

**1.** Verfahren zur Herstellung von mono-, bi- oder polyfunktionellen Biarylen der allgemeinen Formel I

$$Ar - Ar' \qquad (I)$$

durch Umsetzung einer Arylverbindung der Formel II

$$Ar - X \qquad (II)$$

mit einem Arylboronsäurederivat der Formel III

$$Ar' - B(OR^1)_2 \qquad (III)$$

in Anwesenheit eines Katalysators,
**dadurch gekennzeichnet,**
**daß** man als Katalysator einen Metallkomplex der allgemeinen Formel IV

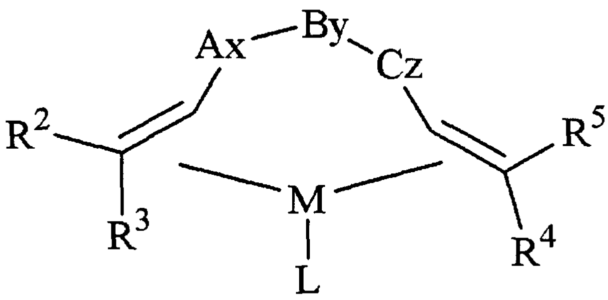

(IV)

einsetzt, wobei in den Formeln I bis IV

| | |
|---|---|
| Ar' und Ar | jeweils unabhängig voneinander ein gegebenenfalls beliebig substituierter mono- oder polycyclischer aromatischer Rest mit bis zu 14 C-Atomen im Ring, oder ein gegebenenfalls beliebig substituierter heteroaromatischer Rest mit 5 bis 10 Atomen im Ring, wovon bis zu vier Atome unabhängig voneinander N, O oder S sein können, |
| X | J, Br, Cl, $OSO_2CF_3$, $OSO_2$(Aryl), $OSO_2$(Alkyl), $N_2^+$, |
| M | Nickel, Palladium oder Platin, |
| L | ein monodentater phosphororganischer Ligand $PR^6R^7R^8$, |
| A, B, C | unabhängig voneinander Sauerstoff, Schwefel, eine $CH_2$-Gruppe, eine $C(R^9)_a(R^{10})_b$-Gruppe, eine $N(R^{11})_c$-Gruppe, eine $Si(R^{12})_d(R^{13})_e$-Gruppe, wobei a, b, c, d, e unabhängig voneinander 0 oder 1 und für den Fall, daß a, b, c, d, e mindestens eines der beteiligten Reste 0 ist, A, B und C auch Teile eines Ringsystems sein können, |
| x, y, z | 0 oder 1 und x+y+z = 1 bis 3, |
| R1 | Wasserstoff, einen Alkyl-, Aryl- oder Alkenylrest, wobei in Formel III $B(OR^1)_2$ auch ein Ringsystem bilden kann, |
| $R^6$ bis $R^8$ | die Bedeutung von $R^1$, oder O-Alkyl, O-C(O)-Alkyl, O-(Aryl) sowie Gruppen eines beliebigen kondensierten Ringsystems, |
| $R^2$ bis $R^5$ und $R^9$ bis $R^{13}$ | die Bedeutung von $R^1$, oder O-Alkyl, O-C(O)-Alkyl, O-(Aryl), O-C(O)-Aryl, F, Cl, OH, $NO_2$, $Si(Alkyl)_3$, $CF_3$, CN, $CO_2H$, C(O)H, $SO_3H$, $NH_2$, NH(Alkyl), $N(Alkyl)_2$, $P(Alkyl)_2$, $SO_2$(Alkyl), SO(Alkyl), SO(Aryl), $SO_2$(Aryl), $SO_3$(Alkyl), $SO_3$(Aryl), S-Alkyl, S-Aryl, S-Alkenyl, NH-CO(Alkyl), $CO_2$(Alkyl), $CONH_2$, CO(Alkyl), NHCOH, $NHCO_2$(Alkyl), CO(Aryl), $CO_2$(Aryl),CH=CH-$CO_2$(Alkyl), CH=CH-$CO_2H$, $P(Aryl)_2$, $PO(Aryl)_2$, $PO(Alkyl)_2$, $PO_3H$, $PO(O\text{-}Alkyl)_2$, sowie Gruppen eines beliebigen kondensierten Ringsystems,<br>wobei Alkyl für einen Kohlenwasserstoffrest mit 1 bis 10 C-Atomen und Alkenyl für einen ein- oder mehrfach ungesättigten Kohlenwasserstoffrest mit 1 bis 10 C-Atomen, die jeweils verzweigt und/oder mit Cl, F, Alkyl, O-Alkyl, Phenyl, O-Phenyl substituiert sein können, und Aryl für einen gegebenenfalls mit Cl, F, Alkyl, O-Alkyl, Phenyl, O-Phenyl substituierten aromatischen oder heteroaromatischen Rest mit 5 bis 10 Atomen im Ring, steht, |

bedeutet.

**2.** Verfahren nach Anspruch 1,

**dadurch gekennzeichnet,**
**daß** man eine Arylverbindung der Formel II mit einem Arylboronsäurederivat der Formel III, in denen Ar und Ar' unabhängig voneinander für einen gegebenenfalls substituierten Phenyl-, Naphthyl-, Anthryl-, Phenanthryl-, oder Biphenylrest stehen, umsetzt.

**3.** Verfahren nach Anspruch 1,
**dadurch gekennzeichnet,**
**daß** man eine Arylverbindung der Formel IIa

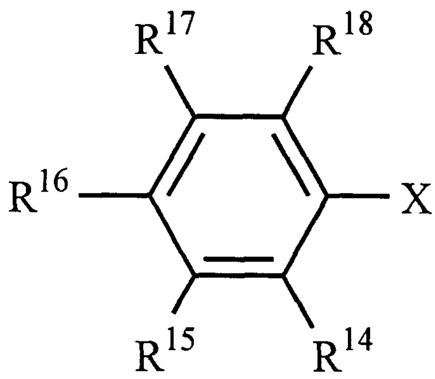

(IIa)

worin $R^{14}$ bis $R^{18}$ die für $R^2$ bis $R^5$ und $R^9$ bis $R^{13}$ gegebenen Bedeutungen besitzen, einsetzt.

**4.** Verfahren nach Anspruch 3,
**dadurch gekennzeichnet,**
**daß** man ein Arylboronsäurederivat der Formel IIIa

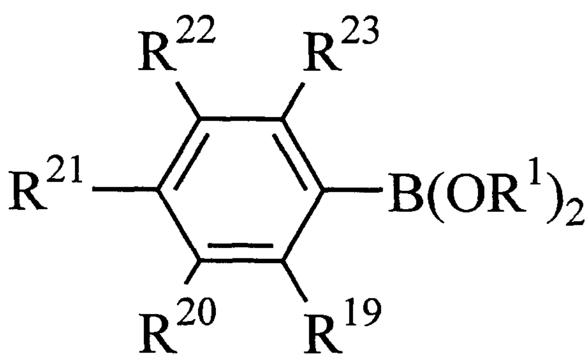

(IIIa)

worin $R^{19}$ bis $R^{23}$ die für $R^2$ bis $R^5$ und $R^9$ bis $R^{13}$ gegebenen Bedeutungen besitzen, einsetzt.

**5.** Verfahren nach den Ansprüchen 1 bis 4,
**dadurch gekennzeichnet,**
**daß** man einen Katalysator der Formel IV einsetzt, in dem als Dienligand Diallylether, Diallylamin, Diallylmethylamin, N-Acetyldiallylamin, Diallylsulfid, Diallylsilan, Diallyldimethylsilan, Divinyldisiloxan, Bis-([2]thienylmethyl)-ether, Bis-(2-cyano-3ξ-[2]furylallyl)-ether, 1,1,3,3-Tetramethyl-1,3-divinyl-disiloxan, Difurfurylether, Difurfurylamin, Bis(thiophen-2-yl-methyl)-amin, Difurfurylsulfid, 1,1,3,3-Tetramethyl-1,3-dithien-2-yldisiloxan, 1,1,3,3-Tetramethoxy-1,3-divinyldisiloxan, 1,3-Dimethyl-1,3-divinyldisiloxandiol, 1,3,5,7-Tetramethyl-1,3,5,7-tetravinylcyclotetrasiloxan, 1,3,5-Trimethyl-1,3,5-trivinylcyclotrisiloxan, 1,3,5,7,9-Pentamethyl-1,3,5,7,9-pentavinyl-cyclopentasiloxan, 1,3-Divinylbenzol, 2,6-Divinylpyridin und deren Derivate fungieren.

6. Verfahren nach den Ansprüchen 1 bis 5,
**dadurch gekennzeichnet,**
**daß** man einen Katalysator der Formel IV einsetzt, in dem als Ligand L ein Trialkylphosphin oder ein Triarylphosphin mit den für Alkyl und Aryl gegebenen Bedeutungen fungiert.

7. Verfahren nach Anspruch 6,
**dadurch gekennzeichnet,**
**daß** man einen Katalysator der Formel IV einsetzt, in dem als Ligand L Tricyclohexylphosphin, Tri-tert-butylphosphin, Triphenylphosphin, Tri-o-tolylphosphin, Di-(1-adaman-tyl)-n-butylphosphin, Di-(1-adamantyl)-i-propyl-phosphin, Di-(1-adamantyl)-cyclohexylphosphin, 2-(Di-cyclohexylphosphino)-biphenyl, 2-(Dicyclohexylphosphino)-toluol, N,N-Dimethyl-2-(dicyclohexylphosphino)-anilin, 2-(Di-t-butylphosphino)-biphenyl, 2-(Di-t-butyl-phosphino)-toluol, N,N-Dimethyl-2-(di-t-butylphosphino)-anilin fungieren.

8. Verfahren nach den Ansprüchen 1 bis 7,
**dadurch gekennzeichnet,**
**daß** man 0.001 bis 10 mol%, vorzugsweise 0,01 bis 1 mol% an Katalysator, bezogen auf die Konzentration an Arylverbindung oder Arylboronsäurederivat, einsetzt.

9. Verfahren nach den Ansprüchen 1 bis 8,
**dadurch gekennzeichnet,**
**daß** man die Reaktion bei Temperaturen von 0 bis 200°C, vorzugsweise bei 40 bis 180°C, und besonders bevorzugt bei 60 bis 160°C durchführt.

10. Verfahren nach den Ansprüchen 1 bis 9,
**dadurch gekennzeichnet,**
**daß** man die Reaktion bei einem Druck zwischen 0,5 und 100 bar durchführt.

11. Verfahren nach den Ansprüchen 1 bis 10,
**dadurch gekennzeichnet,**
**daß** man eine Base zusetzt.

12. Verfahren nach Anspruch 11,
**dadurch gekennzeichnet,**
**daß** man als Base ein primäres, sekundäres oder tertiäres Amin, insbesondere ein Alkylamin, Dialkylamin oder Trialkylamin, das vorzugsweise alicyclisch oder offenkettig ist, zusetzt.

13. Verfahren nach Anspruch 11,
**dadurch gekennzeichnet,**
**daß** man als Base ein Alkali- oder Erdalkalisalz aliphatischer oder aromatischer Carbonsäuren, insbesondere ein Acetat, Propionat, Benzoat, oder ein Alkali- oder Erdalkalicarbonat, -hydrogencarbonat, -phosphat, -hydrogenphosphat, -oxid oder -hydroxyd zusetzt.

14. Verfahren nach Anspruch 11,
**dadurch gekennzeichnet,**
**daß** man als Base ein Metallalkoxid, insbesondere ein Alkali- oder Erdalkalialkoxid, wie Natriummethanolat, Kaliummethanolat, Kaliumethanloat, Magnesiumethanolat, Calciumethanolat, Calciummethanolat, Natriumethanolat, Magnesiummethanolat, Natrium-t-butanolat oder Kalium-t-butanolat, zusetzt.

15. Verfahren nach den Ansprüchen 1 bis 14,
**dadurch gekennzeichnet,**
**daß** man einen Co-Katalysator zusetzt.

16. Verfahren nach Anspruch 15,
**dadurch gekennzeichnet,**
**daß** man als Co-Katalysator das Salz eines Halogens, insbesondere ein Halogenid der Alkali- oder Erdalkalielemente, ein Ammoniumhalogenid, ein Tetraalkylammoniumhalogenid, ein Phosphoniumhalogenid oder ein Tetraalkylphosphoniumhalogenid, vorzugsweise ein Fluorid, Bromid oder Chlorid, besonders bevorzugt Lithiumbromid, Lithiumchlorid, Natriumbromid, Kaliumbromid, Cäsiumbromid, Tetrabutylammoniumchlorid, Tetrabutylammoniumfluorid, Cäsiumfluorid, Calciumfluorid, Natriumfluorid, Kaliumfluorid, Tetrabutylammoniumfluorid, Benzyltrimethylammoniumbromid, Benzyltrimethylammoniumchlorid, Tetraphenylphosphoniumbromid, Tetraphenylphosphoniumchlorid, Trioctylmethylammoniumbromid, einsetzt.

**17.** Verfahren den Ansprüchen 15 oder 16,
**dadurch gekennzeichnet,**
**daß** der Co-Katalysator in einer Menge von 0.01 mol% bis 500 mol%, vorzugsweise 0.1 bis 300 mol%, bezogen auf die Menge an Arylverbindung oder Arylboronsäurederivat, zugegeben wird.

**18.** Verfahren nach den Ansprüchen 1 bis 17,
**dadurch gekennzeichnet,**
**daß** der Katalysator der Formel IV in situ hergestellt wird.

Europäisches Patentamt

# EUROPÄISCHER RECHERCHENBERICHT

Nummer der Anmeldung
EP 01 12 4744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | LITTKE A F ET AL: "Versatile Catalysts for the Suzuki Cross Coupling of Aryl-Boronic acids with Aryl and Vinyl Halides and Triflates under mild conditions" JOURNAL OF THE AMERICAN CHEMICAL SOCIETY, AMERICAN CHEMICAL SOCIETY, WASHINGTON, DC, US, Bd. 122, 15. April 2000 (2000-04-15), Seiten 4020-4028, XP002170344 ISSN: 0002-7863 * das ganze Dokument * ----- | 1 | C07B37/04 |

| RECHERCHIERTE SACHGEBIETE (Int.Cl.7) |
|---|
| C07B<br>C07F |

Der vorliegende Recherchenbericht wurde für alle Patentansprüche erstellt

| Recherchenort | Abschlußdatum der Recherche | Prüfer |
|---|---|---|
| DEN HAAG | 22. Februar 2002 | Diederen, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)